(19) Europäisches Patentamt
European Patent Office
Office européen des brevets

(11) **EP 2 457 215 B1**

(12) **EUROPÄISCHE PATENTSCHRIFT**

(45) Veröffentlichungstag und Bekanntmachung des Hinweises auf die Patenterteilung:
**25.09.2013 Patentblatt 2013/39**

(21) Anmeldenummer: **10732392.5**

(22) Anmeldetag: **15.07.2010**

(51) Int Cl.:
***G06T 5/20*** (2006.01)

(86) Internationale Anmeldenummer:
**PCT/EP2010/060254**

(87) Internationale Veröffentlichungsnummer:
**WO 2011/009806 (27.01.2011 Gazette 2011/04)**

(54) **VERFAHREN UND VORRICHTUNG ZUR ERZEUGUNG EINES ERGEBNISBILDES DURCH ANWENDEN EINES OPERATORS AUF EIN EINGANGSBILD MIT N ZEILEN**

METHOD AND APPARATUS TO GENERATE A TARGET IMAGE BY APPLYING AN OPERATOR TO A INPUT IMAGE HAVING N LINES

PROCÉDÉ ET PROCESSUS DE GENERATION D'UN IMAGE CIBLE PAR APPLICATION D'UN OPERATEUR SUR UN IMAGE SOURCE COMPRENANT N LIGNES

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **23.07.2009 DE 102009034382**

(43) Veröffentlichungstag der Anmeldung:
**30.05.2012 Patentblatt 2012/22**

(73) Patentinhaber: **Carl Zeiss Microscopy GmbH 07745 Jena (DE)**

(72) Erfinder: **BUROW, Manfred 81379 München (DE)**

(74) Vertreter: **Geyer, Fehners & Partner Patentanwälte Perhamerstrasse 31 80687 München (DE)**

(56) Entgegenhaltungen:
**US-B1- 6 721 458    US-B1- 7 623 732**

- **Klette R, Zamperoni P: "Handbook of Image Processing Operators" August 1996 (1996-08), John Wiley & Sons Ltd. , Chichester, West Sussex PO19 1UD, UK , XP002602373 ISBN: 0-471-95942-2 , Seiten 76-95 das ganze Dokument**

- **WALTZ F M ET AL: "GRAY-SCALE IMAGE PROCESSING ALGORITHMS USING FINITE-STATE MACHINE CONCEPTS" JOURNAL OF ELECTRONIC IMAGING, SPIE / IS & T LNKD- DOI: 10.1117/1.1329334, Bd. 10, Nr. 1, 1. Januar 2001 (2001-01-01) , Seiten 297-307, XP001087052 ISSN: 1017-9909**

- **TETSUO ASANO ED - FRANK NIELSEN: "Constant-Working-Space Algorithms for Image Processing" 18. November 2008 (2008-11-18), EMERGING TRENDS IN VISUAL COMPUTING, SPRINGER BERLIN HEIDELBERG, BERLIN, HEIDELBERG, PAGE(S) 268 - 283 , XP019115857 ISBN: 978-3-642-00825-2 das ganze Dokument**

- **HAIQIAN YU ET AL: "Automatic Sliding Window Operation Optimization for FPGA-Based" FIELD-PROGRAMMABLE CUSTOM COMPUTING MACHINES, 2006. FCCM '06. 14T H ANNUAL IEEE SYMPOSIUM ON, IEEE, PI, 1. April 2006 (2006-04-01), Seiten 76-88, XP031022162 ISBN: 978-0-7695-2661-4**

- **CHANG T-S ET AL: "A Memory-Efficient Realization of Cyclic Convolution and Its Application to Discrete Cosine Transform" IEEE TRANSACTIONS ON CIRCUITS AND SYSTEMS FOR VIDEO TECHNOLOGY, IEEE SERVICE CENTER, PISCATAWAY, NJ, US LNKD- DOI: 10.1109/TCSVT.2004.842608, Bd. 15, Nr. 3, 1. März 2005 (2005-03-01), Seiten 445-453, XP011127243 ISSN: 1051-8215**

- WEI-HSIN CHANG ET AL: "A line-based, memory efficient and programmable architecture for 2D DWT using lifting scheme" ISCAS 2001. THE 2001 IEEE INTERNATIONAL SYMPOSIUM ON CIRCUITS AND SYSTEMS (CAT. NO.01CH37196) IEEE PISCATAWAY, NJ, USA; [IEEE INTERNATIONAL SYMPOSIUM ON CIRCUITS AND SYSTEMS],, Bd. 4, 6. Mai 2001 (2001-05-06), Seiten 330-333, XP010541860 ISBN: 978-0-7803-6685-5

- GABCHEON JUNG ET AL: "Efficient VLSI Architectures for Convolution and Lifting Based 2-D Discrete Wavelet Transform" 1. Januar 2005 (2005-01-01), ADVANCES IN COMPUTER SYSTEMS ARCHITECTURE LECTURE NOTES IN COMPUTER SCIENCE;;LNCS, SPRINGER, BERLIN, DE, PAGE(S) 795 - 804 , XP019022411 ISBN: 978-3-540-29643-0 das ganze Dokument

**Beschreibung**

Die vorliegende Erfindung betrifft ein Verfahren zur Erzeugung eines Ergebnisbildes durch Anwenden eines Operators auf ein Eingangsbild mit n Zeilen gemäß des Oberbegriffs des Anspruches 1 und eine Vorrichtung zur Erzeugung eines Ergebnisbildes durch Anwenden eines Operators auf ein Eingangsbild mit n Zeilen gemäß des Oberbegriffs des Anspruches 9.

Ein Verfahren und eine Vorrichtung der eingangs genannten Art sind z.B. aus Klette R, Zamperoni P: "Handbook of Image Processing Operators", August 1996, Wiley & Sons Ltd., UK Seiten 76-95 bekannt. Ein Verfahren der eingangs genannten Art zur Bilderzeugung bzw. Bildbearbeitung wird z.B. im Bereich der Mikroskopie eingesetzt. Dort werden Mikroskopaufnahmen einer Bildverbesserung (beispielsweise Rauschunterdrückung, nachträgliches Schärfen...) und/ oder einer Bildanalyse oder Mustererkennung, bei der beispielsweise Gradientenfilter eingesetzt werden, unterworfen.

Für eine solche Bildbearbeitung werden üblicherweise Computer eingesetzt, wobei die Daten des Eingangsbildes und die Daten des Ausgangsbildes in getrennten Speicherbereichen (z.B. des Arbeitsspeichers) gleicher Größe abgelegt werden, um ein unerwünschtes Überschreiben der Eingangsdaten zu vermeiden. Somit wird zusätzlich zu dem Speicherbereich für das Eingangsbild noch ein zweiter Speicherbereich gleicher Größe für das Ergebnisbild genutzt, wodurch eine hohe Speicherkapazität benötigt wird. Jedoch ist trotz der andauernden Zunahme der Speicherkapazität (insbesondere des Arbeitsspeichers) der vorhandene Speicher für solche Bilderzeugung bzw. Bearbeitung knapp, da die Bilder immer größer werden, z.B. aufgrund höherer Auflösungen oder weiterer Dimensionen. So sind derzeit in der Mikroskopie durchaus Bilder mit einer Auflösung von 10 k x 10 k Bildpunkten oder 100 k x 100 k Bildpunkten üblich.

In der Druckschrift Waltz et al.: "Gray-scale image processing algorithms using finite-state machine concepts", Journal of Electronic Imaging, SPIE/IS&T, Bd. 10, Nr. 1, Januar 2001, Seiten 297-307 werden Graustufenbildverarbeitungsalgorithmen beschrieben, die Konzepte endlicher Automaten verwenden. Aufgrund der extrem großen Anzahl von Zuständen ist die Verwendung von Nachschlagetabellen für eine direkte Implementation in endlichen Automaten nicht praktikabel. Bei Verwendung von geeigneten Codiertechniken (wie z.B. Graustufenmorphologie und Gauß-Tiefpaßfilterung) können dennoch deutliche Geschwindigkeitsvorteile erzielt werden.

Asano T: "Constant-Working-Space Algorithms for Image Processing", 18. November 2008, Emerging Trends in Visual Computing, Springer, Seiten 268-283, beschreibt Ansätze im Bereich der Bildbearbeitung, wenn das Eingangsbild in einem ROM-Speicher vorliegt und die Anzahl der benutzbaren Speicherzellen konstant ist.

Haiqian Y et al.: "Automatic Sliding Window Operation Optimization for FPGA-Based Computing Boards", Field-Programmable Custom Computing Machines, 2006. FCCM '06, 14th Annual IEEE Symposium on, IEEE, 1. April 2006, Seiten 76-88, beschreibt ein Optimierungsverfahren zum Erzeugen eines Blocklayouts für ein FPGA, das als Hardware-Beschleuniger für Bildverarbeitungsalgorithmen basierend auf Anwendungen mit bewegten Fenstern verwendet wird.

Chang et al.: "A Memory-Efficient Realization of Cyclic Convolution and Its Application to Discrete Cosine Transform", IEEE Transaction on Circuits and Systems for Video Technology, IEEE Service Center, Piscataway, NJ, US, Bd. 15, Nr. 3, 1. März 2005, Seiten 445-453 beschreibt einen speichereffizienten Ansatz, um die zyklische Faltung und ihre Anwendung bei der diskreten Kosinustransformation zu realisieren.

Ausgehend hiervon ist es Aufgabe der Erfindung, ein Verfahren zur Erzeugung eines Ergebnisbildes durch Anwenden eines Operators auf ein Eingangsbild mit n Zeilen der eingangs genannten Art so zu verbessern, daß der Speicherbedarf zur Durchführung des Verfahrens verringert ist. Ferner soll eine Vorrichtung zur Erzeugung eines Ergebnisbildes durch Anwenden eines Operators auf ein Eingangsbild mit n Zeilen der eingangs genannten Art so verbessert werden, daß der Speicherbedarf verringert ist.

Erfindungsgemäß wird die Aufgabe bei einem Verfahren zur Erzeugung eines Ergebnisbildes durch Anwenden eines Operators auf ein Eingangsbild mit n Zeilen der eingangs genannten Art dadurch gelöst, daß k + 1 Zusatzzeilen eines zweiten Bereiches des Datenspeichers reserviert werden, wobei der Operator aus Daten von jeweils g Bildzeilen die Daten für jeweils eine Zeile des Ergebnisbildes oder eines Zwischenbildes zur Erzeugung des Ergebnisbildes berechnet und so in den Daten- und Zusatzzeilen zeilenweise ablegt, daß die berechneten Daten zunächst in den Zusatzzeilen und danach in den Datenzeilen, die der Operator für die Berechnung weiterer Zeilen des Ergebnisbildes oder des Zwischenbildes nicht mehr benötigt, abgelegt werden.

Bei dem erfindungsgemäßen Verfahren werden zusätzlich zu den n Datenzeilen des ersten Bereiches lediglich die k + 1 Zusatzzeilen des zweiten Bereiches benötigt, so daß eine Reduzierung der benötigten Speicherkapazität um fast die Hälfte erreicht werden kann.

Da die berechneten Daten zunächst in den Zusatzzeilen und danach in den nicht mehr benötigten Datenzeilen abgelegt werden, werden die ersten k + 1 berechneten Zeilen des Ergebnis- oder Zwischenbildes in den Zusatzzeilen abgelegt und werden die (k + 2)te und alle nachfolgend berechneten Zeilen in den nicht mehr benötigten Datenzeilen abgelegt.

Das erfindungsgemäße Verfahren kann iterativ durchgeführt werden, d.h. der Operator oder ein weiterer Operator kann mehrfach angewendet werden. Bei hierarchischer Kaskadierung kann das Verfahren auf ein Eingangsbild beliebiger Dimension angewendet werden.

Bei dem Verfahren kann nach Berechnung und Speicherung der Daten für das Ergebnisbild, sofern zumindest eine Ergebnisbildzeile in einer der Zusatzzeilen gespeichert ist, die zumindest eine Ergebnisbildzeile aus der Zusatzzeile in zumindest eine Datenzeile kopiert werden. Dieses Kopieren kann insbesondere so durchgeführt werden, daß die Ergebnisbildzeilen der Reihe nach in den Datenzeilen gespeichert sind.

Bevorzugt werden nach dem Kopieren die Zusatzzeilen freigegeben, so daß sie anderweitig verwendet werden können.

Das Ergebnisbild weist insbesondere n Zeilen auf.

Bei dem Operator handelt es sich bevorzugt um einen lokalen homogenen Operator (z.B. Filter), der, wie bereits beschrieben, zeilensequentiell auf die Daten zugreift.

Bei dem erfindungsgemäßen Verfahren kann der Operator über eine erste Adreßtabelle auf die im Datenspeicher abgelegten Eingangsbilddaten zugreifen und über eine zweite Adreßtabelle die Daten des Ergebnis- bzw. Zwischenbildes im Datenspeicher ablegen, wobei die beiden Adreßtabellen zueinander um (k + 1) Zeilen zyklisch verschoben sind.

Damit können in für den Operator transparenter Art und Weise Zeilen aus dem gleichen Speicherbereich für Eingangsbilddaten sowie für die Ergebnis- bzw. Zwischenbilddaten bereitgestellt werden. Der Operator adressiert die Zeilen des Eingangsbildes sowie die Zeilen des Ergebnis- bzw. Zwischenbildes z.B. jeweils von 1 bis n.

Insbesondere kann nach der Erzeugung des Zwischenbildes der Operator iterativ ($l$-1) mal auf das jeweils erzeugte Zwischenbild angewendet werden (es werden somit $l$ Iterationen bezogen auf das Eingangsbild durchgeführt), wobei für jede Iteration eine erste Adreßtabelle (für die in diesem Iterationsschritt zu bearbeitenden Daten) und eine zweite Adreßtabelle (für die in diesem Iterationsschritt berechneten Daten) verwendet wird, die gegenüber der jeweiligen ersten und zweiten Adreßtabelle des unmittelbar vorhergehenden Iterationsschrittes um jeweils (k + 1) Zeilen zyklisch verschoben sind. Ein wichtiger Punkt ist hierbei, daß die so zyklisch verschobenen Adreßtabellen zueinander wiederum um (k + 1) Zeilen zyklisch verschoben sind.

Als erste Adreßtabelle für einen Iterationsschritt kann z.B. die zweite Adreßtabelle des unmittelbar vorhergehenden Iterationsschrittes verwendet werden. Die zweite Adreßtabelle für den einen Iterationsschritt kann durch zyklische Verschiebung um (k + 1) Zeilen der so bestimmten ersten Adreßtabelle für den einen Iterationsschritt oder durch zyklische Verschiebung um (k + 1) Zeilen der zweiten Adreßtabelle des unmittelbar vorhergehenden Iterationsschrittes abgeleitet werden. Dies läßt sich sehr schnell durchführen, da nur für die zweite Adreßtabelle die zyklische Verschiebung durchzuführen ist.

Alternativ ist es möglich, die erste Adreßtabelle für einen Iterationsschritt durch zyklisches Verschieben um (k + 1) Zeilen der ersten Adreßtabelle des unmittelbar vorhergehenden Iterationsschrittes und die zweite Adreßtabelle für den einen Iterationsschritt durch zyklisches Verschieben um (k + 1) Zeilen der zweiten Adreßtabelle des unmittelbar vorhergehenden Iterationsschrittes zu erzeugen.

Ferner kann bei dem Verfahren eine oder mehrere zyklische Kopierketten bestimmt werden, die alle jeweils einmal zu durchlaufen sind, um die Ergebnisbildzeilen der Reihe nach in den Datenzeilen zu speichern. Die so bestimmte Kopierkette bzw. so bestimmten Kopierketten werden dann jeweils einmal durchlaufen, damit die gewünschte Reihenfolge in den Datenzeilen vorliegt. Es ist dann in der ersten Datenzeile die erste Zeile des Ergebnisbildes, in der zweiten Datenzeile ist die zweite Zeile des Ergebnisbildes, ... und in der n-ten Datenzeile ist die n-te Zeile des Ergebnisbildes abgelegt.

Als erste Datenzeile für jede Kopierkette wird bevorzugt eine Datenzeile ausgewählt, in der keine Daten des Ergebnisbildes abgelegt sind.

Bei dem erfindungsgemäßen Verfahren kann der Wert von [$l$(k + 1)]mod(n + k + 1) als Parameter w berechnet werden, wobei, wenn w = 0, kein Kopieren des Ergebnisbildzeilen notwendig ist, da diese bereits der Reihe nach in den Datenzeilen abgespeichert sind, wenn w # 0 und wenn der größte gemeinsame Teiler t von $l$(k + 1) und (n + k + 1) gleich 1 ist, eine einzige Kopierkette über alle Daten- und Zusatzzeilen bestimmt wird, und wenn w ≠ 0 und t > 1 ist, t disjunkte Kopierketten mit jeweils der Länge $\dfrac{n + k + 1}{t}$ bestimmt werden, und bei w ≠ 0 die bestimmte(n) Kopierkette(n) abgearbeitet wird/werden.

Bei dem erfindungsgemäßen Verfahren kann nach Berechnung aller Zeilen des Zwischenbildes auf das Zwischenbild ein weiterer Operator, der eine Ausdehnung von g' Zeilen aufweist, wobei g' größer oder gleich zwei Zeilen und kleiner oder gleich zwei 2k + 1 Zeilen ist, so angewendet werden, daß aus Daten von jeweils g' Zeilen des Zwischenbildes jeweils eine Zeile des Ergebnisbildes oder eines weiteren Zwischenbildes berechnet und so in den Daten- und Zusatzzeilen zeilenweise abgelegt wird, daß die berechneten Daten zunächst in den Daten- und Zusatzzeilen, die keine Zeilen des Zwischenbildes enthalten, und danach in den Daten- und Zusatzzeilen, die der weitere Operator für die Berechnung weiterer Zeilen des Ergebnisbildes oder des weiteren Zwischenbildes nicht mehr benötigt, abgelegt werden.

Die Aufgabe wird ferner bei einer Vorrichtung zur Erzeugung eines Ergebnisbildes durch Anwenden eines Operators auf ein Eingangsbild mit n Zeilen der eingangs genannten Art dadurch gelöst, daß die Vorrichtung k + 1 Zusatzzeilen eines zweiten Bereiches des Datenspeichers reserviert und den Operator so auf die Daten des Eingangsbildes anwendet, daß der Operator aus Daten von jeweils g Bildzeilen die Daten für jeweils eine Zeile des Ergebnisbildes oder eines Zwischenbildes zur Erzeugung des Ergebnisbildes berechnet und so in den Daten- und Zusatzzeilen zeilenweise ablegt, daß die berechneten Daten zunächst in den Zusatzzeilen und danach in den Datenzeilen, die der Operator für die Berechnung weiterer Zeilen des Ergebnisbildes oder des Zwischenbildes nicht mehr benötigt, abgelegt werden.

Die erfindungsgemäße Vorrichtung kann gemäß den abhängigen Vorrichtungsansprüchen weitergebildet werden. Insbesondere kann mit der erfindungsgemäßen Vorrichtung das erfindungsgemäße Verfahren sowie die Weiterbildung des erfindungsgemäßen Verfahrens ausgeführt werden.

Es versteht sich, daß die vorstehend genannten und die nachstehend noch zu erläuternden Merkmale nicht nur in den angegebenen Kombinationen, sondern auch in anderen Kombinationen oder in Alleinstellung einsetzbar sind, ohne den Rahmen der vorliegenden Erfindung zu verlassen.

Nachfolgend wird die Erfindung beispielsweise anhand der beigefügten Zeichnungen, die auch erfindungswesentliche Merkmale offenbaren, noch näher erläutert. Es zeigen:

Fig. 1    eine schematische Ansicht der erfindungsgemäßen Vorrichtung;

Fig. 2    eine schematische Darstellung des ersten Bereiches 8 des Datenspeichers 4;

Fig. 3    eine schematische Darstellung des ersten und zweiten Bereiches 8, 9 des Datenspeichers 4, und

Fig. 4    eine schematische Darstellung der Zuordnung der Zeilen des Ergebnisbildes zum ersten und zweiten Bereich 8, 9 des Datenspeichers 4, und

Fig.5    eine schematische Darstellung der Zuordnung der Zeilen des Ergebnisbildes zum ersten und zweiten Bereich 8, 9 des Datenspeichers 4 bei nochmaliger Anwendung des Operators O auf die Bilddaten gemäß Fig. 4.

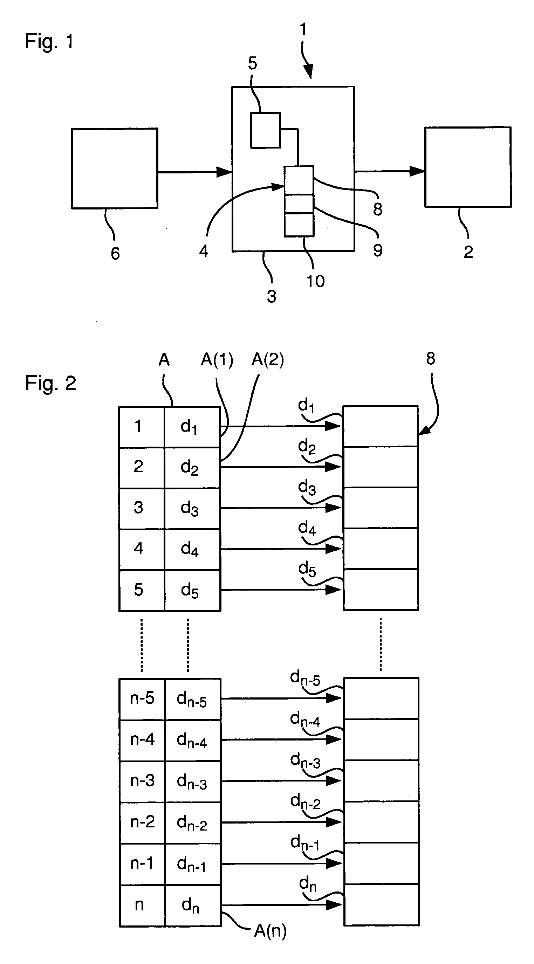

Bei der in Fig. 1 gezeigten Ausführungsform umfaßt die erfindungsgemäße Vorrichtung 1 zur Erzeugung eines Ergebnisbildes 2 einen Computer 3, der unter anderem einen Datenspeicher 4 in Form eines flüchtigen Arbeitsspeichers (RAM), sowie eine Recheneinheit 5 umfaßt. Bei dem Computer 3 kann es sich insbesondere um einen handelsüblichen Computer handeln.

Dem Computer 3 wird ein Eingangsbild 6 zugeführt, auf das, wie nachfolgend noch detailliert beschrieben wird, der Computer 3 bzw. die Recheneinheit 5 einen Operator O (beispielsweise einen Filteroperator) anwendet, um das gewünschte Ergebnisbild 2 zu erhalten. Dies wird erfindungsgemäß so umgesetzt, daß die Daten des Eingangsbildes 6 sowie die Daten des Ergebnisbildes 2 im selben Speicherbereich des Datenspeichers 4 gehalten werden, ohne daß die Daten des Ergebnisbildes 2 noch für die Anwendung des Operators O benötigte Daten des Eingangsbildes 6 zerstören.

Zur detaillierten Beschreibung dieses Vorgehens wird zunächst angegeben, wie das Eingangsbild 6 abgespeichert wird. Das Eingangsbild 6, das n Bildzeilen enthält, wird in einem ersten Bereich 8 des Datenspeichers 4 abgelegt, wobei der erste Bereich 8 n Datenzeilen $d_1$, $d_2$, ... $d_n$ umfaßt, wie in Fig. 2 schematisch dargestellt ist. Die n Bildzeilen werden über die Adreßtabelle A mit den Adreßfeldern A(i) (mit i = 1, 2, 3, ..., n) adressiert.

Der Operator O ist hier ein Zeile- zu- Zeile- Operator, der 2k + 1 Eingangsbildzeilen (über die Adreßtabelle A) des Eingangsbildes 6 aus dem Datenspeicher 4 liest, die gewünschte Verarbeitung durchführt und eine der n Zeilen des Ergebnisbildes erzeugt und wieder im Datenspeicher 4 ablegt. Da die Eingangsbildzeilen, die im Datenspeicher 4 abgelegt sind, über die Adreßfelder A (i) der Adreßtabelle A adressiert werden, werden sie nachfolgend mit A (i) bezeichnet. In gleicher Weise sind die berechneten Ergebnisbildzeilen über eine nicht gezeigte Adreßtabelle B mit Adreßfeldern B (i) (mit i = 1, 2, 3, ...n) im Datenspeicher 4 abzulegen, so daß für die nachfolgenden Ausführungen die Ergebnisbildzeilen mit B (i) bezeichnet werden.

Wenn dies für alle Positionen des Operators O auf den Eingangsbildzeilen A(i), beginnend mit Zeilennummer i = 1 und endend mit Zeilennummer i = n durchgeführt wird, erhält man das gewünschte Ergebnisbild 2. Die Zeilen B(i) des Ergebnisbildes 2 sollen hier zentriert zu den Eingabezeilen A(i) abgelegt werden, so daß der gesamte Vorgang geschrieben werden kann als

$$B(i) = O[A(i - k), A(i - k + 1), ..., A(i + k - 1), A(i + k)] \qquad (1)$$

für alle Bildzeilen i = 1, ..., n.

Um nun ein Überschreiben der noch benötigten Eingangsbildzeilen A(i) im ersten Bereich 8 zu verhindern, wird erfindungsgemäß die Adressierung der Datenzeilen $d_1$, $d_2$, ...$d_n$ über die beiden Adreßtabellen für die Eingangs- und Ergebnisbildzeilen so vorgegeben, daß die Ergebnisbildzeilen nie in Datenzeilen abgelegt werden, die noch benötigte Eingangsbildzeilendaten enthalten. Die dazu notwendigen Adreßtabellen können wie folgt aus der Adreßtabelle A abgeleitet werden. Zunächst wird der Index i auf einen andere Index $j_i$ abgebildet. Die Bedingung ist $j_i < i - k$, so daß weder die gerade zu verarbeitenden Eingangsbildzeilen A(i) noch die Eingangsbildzeilen A(i), die für die Anwendung des Operators O auf die folgenden Zeilen mit Index i + 1, ..., n bis zum Bildende gebraucht werden, überschrieben werden.

Am Anfang des Bildes ist i = 1, damit muß $j_i$ < 1 - k werden und der größtmögliche Index für die erste Ergebnisbildzeile B(i) ist $j_i$ = 1 - k - 1 = - k. Entsprechend wird $j_2$ = - k + 1 für i = 2, bis hin zu $j_n$ = n - k - 1 für i = n.

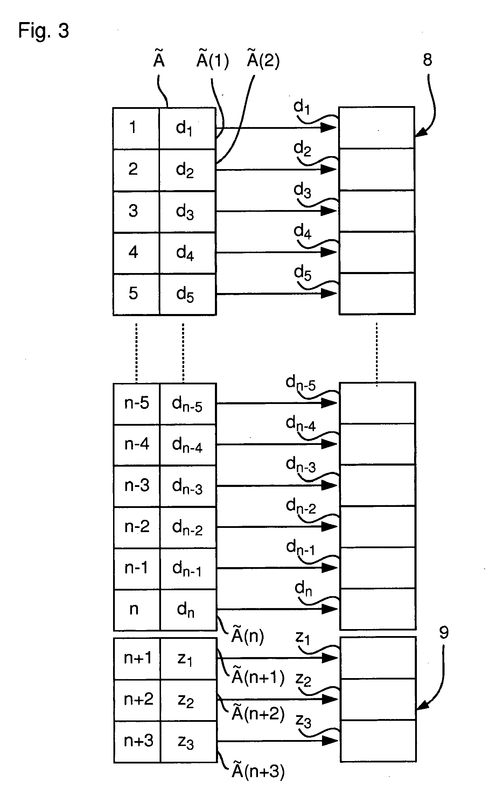

Die k + 1 Zeilen mit den Indizes i = -k bis i = 0 existieren im Eingangsbild 6 nicht, so daß k + 1 Zusatzzeilen $Z_1$, $Z_2$, ... $Z_{k+1}$ als zweiter Bereich 9 im Datenspeicher 4, wie nachfolgend beschrieben, benötigt und reserviert werden. Um die Zusatzzeilen in ein einheitliches Bild zu integrieren, wird die in Fig. 3 gezeigte Adreßtabelle $\tilde{A}$ mit Adreßfeldern $\tilde{A}$ (i) verwendet, deren Indexbereich $1 \leq i \leq n + k + 1$ ist, wovon das Eingangsbild 6 nach wie vor nur die Indizes $1 \leq i \leq n$ belegt. Bei dem in Fig. 3 gezeigten Beispiel ist k = 2. Die entsprechenden Adressen können aus der Originaladreßtabelle A, die in Fig. 2 dargestellt ist, nach $\tilde{A}$ kopiert werden. Die Adressen der Zusatzzeilen z werden unter den Indizes n + 1 $\leq i \leq n + k + 1$ in die Adreßtabelle $\tilde{A}$ eingetragen, um negative Indizes zu vermeiden. Subtrahiert man von diesen Indizes die Konstante m = n + k + 1, so werden sie dadurch auf den vorgenannten negativen Indexbereich $-k \leq i \leq 0$ abgebildet.

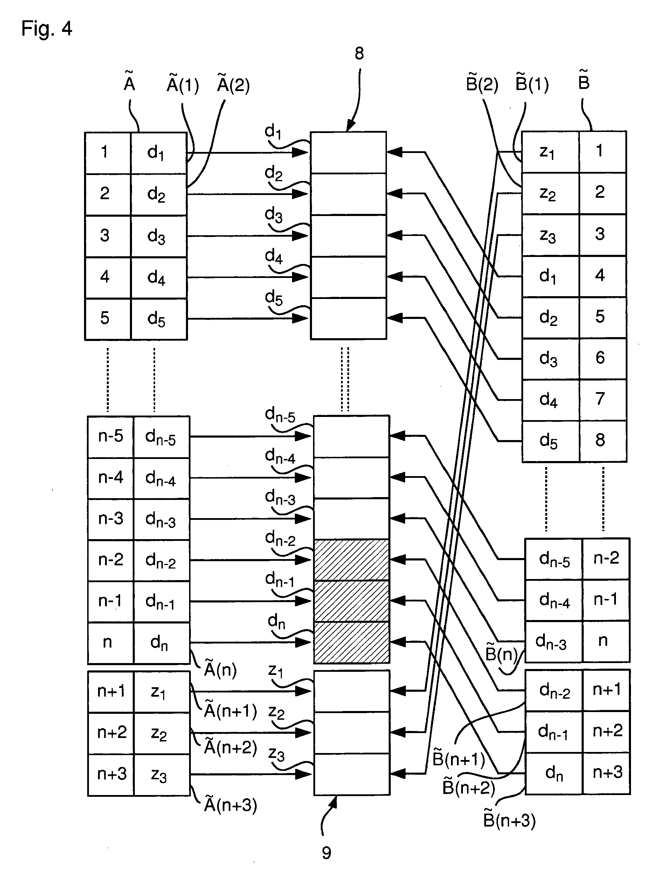

Die Zusatzzeilen z dienen als Reservezeilen, um die Überlappung des Operators O bzw. von Zeilen von Eingangs- und Ergebnisbild 6, 2 im selben Speicherbereich (erster Bereich 8) zu ermöglichen. Um den Indexversatz von i nach j zu realisieren, wird eine Adreßfelder $\tilde{B}(j)$ aufweisende Adreßtabelle $\tilde{B}$ für das Ergebnisbild verwendet, wie in Fig. 4 angedeutet ist, die mit dem Index j die Ergebnisbildzeilen adressiert (die Eingangsbildzeilen werden wiederum mit $\tilde{A}(i)$ und die Ergebnisbildzeilen werden wiederum mit $\tilde{B}(j)$ bezeichnet). So wird z.B. mit j = 1 die erste Ergebnisbildzeile $\tilde{B}(1)$ adressiert, die die erste Zusatzzeile $z_1$ ist, die über die Adreßtabelle $\tilde{A}$ mit i = n + 1 und somit $\tilde{A}$ (n+1) angesprochen wird.

Und daher muß $\tilde{B}(1) \leftarrow \tilde{A}(n + 1)$ werden, $\tilde{B}(2) \leftarrow \tilde{A}(n + 2)$ werden, ..., bis hin zur letzten Zusatzzeile $\tilde{B}(k + 1) \leftarrow \tilde{A}(n + k + 1)$.

Die restlichen Ergebnisbildzeilen überschreiben die dann nicht mehr benötigten Eingangsbildzeilen $\tilde{B}$ (k + 2) $\leftarrow \tilde{A}$ (1), $\tilde{B}$ (k + 3) $\leftarrow \tilde{A}$ (2), ..., bis zur letzten Ergebnisbildzeile $\tilde{B}$ (n) $\leftarrow \tilde{A}$ (n- k- 1) .

Die verbleibenden k + 1 Zeilen von d(n - k) bis d(n) (hier $\tilde{A}$(n - k) bis $\tilde{A}$(n)) werden für das Ergebnisbild nicht gebraucht und sind daher schraffiert dargestellt. Sie können in einem weiteren Durchgang (also wenn der Operator O auf das gerade berechnete Ergebnisbild erneut angewendet wird) als Reservezeilen verwendet werden (in gleicher Weise wie die Zusatzzeilen z, die nach der beschriebenen einmaligen Anwendung des Operators O Bildzeilen des Ergebnisbildes enthalten). Wenn der Operator O mehrmals angewendet wird, kann das nach der letzten Anwendung berechnete Bild als Ergebnisbild und alle davor berechneten Bilder jeweils als Zwischenbild bezeichnet werden. Als Reservezeilen werden hier die Zeilen aus den Speicherbereichen 8, 9 bezeichnet, in denen nach Berechnung des Zwischen- bzw. Ergebnisbildes keine (gültigen) Bildzeilen des gerade berechneten Zwischen- bzw. Ergebnisbildes abgelegt sind.

Über die Adreßtabelle $\tilde{A}$ werden die Eingangsbildzeilen und über die Adreßtabelle $\tilde{B}$ werden die Ergebnisbildzeilen jeweils mit $1 \leq i, j \leq n$ der Reihe nach adressiert, als ob es sich um getrennte Speicherbereiche handeln würde, entsprechend der Formel (1) für den Operator O.

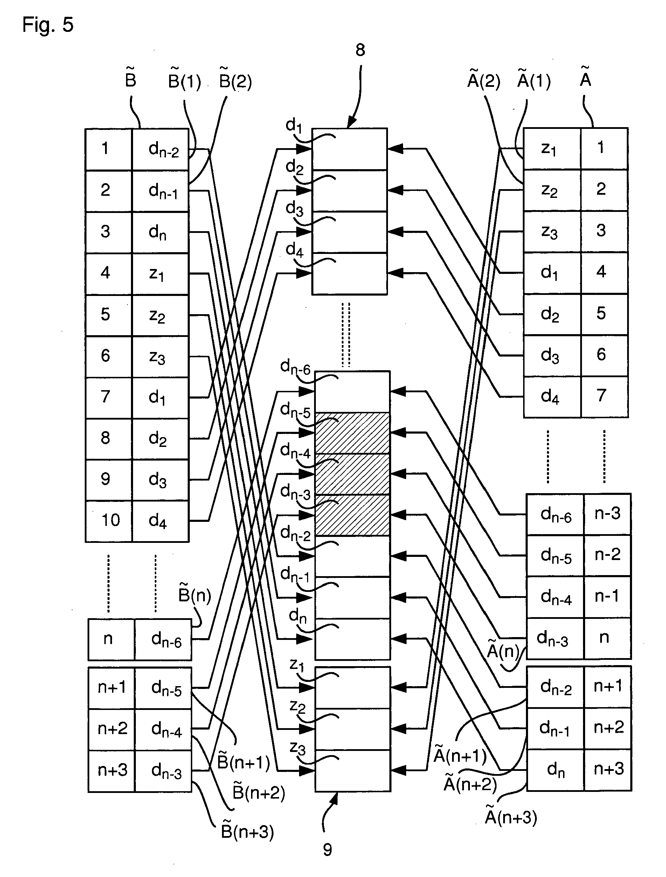

Soll der gleiche oder ein weiterer Operator, der eine maximale Ausdehnung von 2k + 1 Zeilen aufweist, auf das Ergebnisbild (nach einem ersten Berechnungsdurchgang) erneut angewendet werden, so tauschen $\tilde{A}$ und $\tilde{B}$ die Rollen und der Indexversatz für das neue $\tilde{B}$ wird wie vorher aus dem neuen $\tilde{A}$ berechnet, nur daß diesmal die Reservezeilen andere Indizes haben. Die entsprechende Adressierung über die getauschten Adreßtabellen $\tilde{A}$ und $\tilde{B}$ ist in Fig. 5 angedeutet, wobei die Reservezeilen nun $d_{n-2}$, $d_{n-1}$ und d sind. Die Datenzeilen $d_{n-5}$, $d_{n-4}$ und $d_{n-3}$ werden für das berechnete Zwischen- bzw. Ergebnisbild nicht gebraucht und sind wiederum schraffiert dargestellt und werden, falls der Operator O erneut angewendet wird, dann als Reservezeilen verwendet.

Wie insbesondere aus einem Vergleich der Figuren 4 und 5 ersichtlich ist, wandern die Reservezeilen bei jedem Iterationsschritt um k + 1 Zeilen nach oben. Damit dies für den Operator O transparent ist, werden die Adreßtabellen $\tilde{A}$, $\tilde{B}$ entsprechend angepaßt.

Für die erste Iteration (Fig. 4) wird die Adreßtabelle $\tilde{B}$ gegenüber der Adreßtabelle $\tilde{A}$ um (k + 1) Zeilen zyklisch verschoben. Bei jedem weiteren Iterationsschritt wird die Adreßtabelle $\tilde{B}_1$, des zuletzt durchgeführten Iterationsschrittes, als Adreßtabelle $\tilde{A}_2$ des weiteren Iterationsschrittes verwendet und wird die Adreßtabelle $\tilde{B}_1$ um (k + 1 ) Zeilen zyklisch verschoben, um die Adreßtabelle $\tilde{B}_2$ des weiteren Iterationsschrittes zu erhalten. Diese Adreßtabellen $\tilde{A}_2$ und $\tilde{B}_2$ kann man auch dadurch erhalten, daß man für $\tilde{A}_2$ die Adreßtabelle $\tilde{A}_1$ um (k + 1) Zeilen und für $\tilde{B}_2$ die Adreßtabelle $\tilde{B}_1$ um (k + 1) Zeilen zyklisch verschiebt. Die Adreßtabellen $\tilde{A}$ und $\tilde{B}$ sind somit bei jedem Iterationsschritt um (k + 1) Zeilen zueinander zyklisch verschoben.

Der Versatz der Adressen ist für den Anwender transparent, wenn er die Daten über $\tilde{A}$ (i) der Adreßtabelle $\tilde{A}$

und über $\tilde{B}$(j) der Adreßtabelle $\tilde{B}$ zugreift, Eingabebild- und Ergebnisbildzeilen beginnen jeweils mit dem Zeilenindex 1 und enden mit dem Zeilenindex n. Bei Operatoren, die indexsequentielle Zugriffe durchführen, kann somit der Speicherbedarf im Vergleich zu herkömmlichen Verfahren fast um die Hälfte verringert werden.

Nach Abschluß der Verarbeitung stehen die Bildzeilen des Ergebnisbildes 2 in der Regel in veränderter Reihenfolge im ersten Bereich 8. Außerdem sind (z.B. bei einmaliger Anwendung des Operators O) gültige Bildzeilen in den Zusatzzeilen z im zweiten Bereich 9 zu finden. Wenn diese Zusatzzeilen an die Speicherverwaltung des Computers 3 zurückgegeben werden sollen, sind Kopieroperationen von Zeilen notwendig.

Am einfachsten ist es, gültige Bildzeilen, welche sich in den Zusatzzeilen z befinden, in die Reservezeilen im ersten Bereich 8 zu kopieren und die Originaladreßtabelle A so abgeändert zurückzugeben, daß sie die gewünschte Reihenfolge der Bildzeilenadressen über die Adreßfelder A(i) darstellt.

In vielen Fällen wird jedoch erwartet, daß die Ergebnisdaten der Reihe nach im ersten Bereich 8 des Datenspeichers 4 gespeichert sind und somit genau die Plätze der Eingabedaten im ersten Bereich 8 des Datenspeichers 4 eingenommen haben, so daß praktisch alle Bildzeilen kopiert werden müssen. Wurde der Operator O nur einmal angewendet, so genügt es, die Zeilen mit $\tilde{B}$(j) nach $\tilde{A}$(j) zu kopieren. Für die Indizes j = n, ... 1.

Wurde der Operator O mehrfach angewendet bzw. itertiert, so kann auch für diese Fälle ein Kopierschema angewendet werden, so daß jede Bildzeile höchstens einmal kopiert werden muß, ohne daß neben dem ersten und zweiten Bereich 8, 9 ein weiterer Speicherbereich, der mit dem Bezugszeichen 10 in Fig. 1 bezeichnet ist, benötigt wird. Damit ist der Aufwand für das Zurückkopieren klein im Vergleich zur Anwendung des Operators O.

Um die Art und Weise des Zurückkopierens besser beschreiben zu können, wird zunächst die auftretende Adreßverschiebung in den Adreßtabellen $\tilde{A}$ und $\tilde{B}$ bei Anwendung des Operators genauer erläutert.

Um, wie schon beschrieben, zu vermeiden, daß noch benötigte Eingangsbildzeilen $\tilde{A}$(i) durch Ergebnisbildzeilen $\tilde{B}$(j) überschrieben werden, müssen die Ergebnisbildzeilenindizes j den Eingangsbildzeilenindizes i um eine Verschiebung s := k + 1 hinterherlaufen, also $\tilde{B}(i) \leftarrow \tilde{A}(i-(k+1)) = \tilde{A}(i-s)$. Für $i \leq s$ wird i- s in die Zusatzzeilen abgebildet, insgesamt also für i = 1, ..., n + k + 1

$$\tilde{B}(i) \leftarrow \begin{cases} \tilde{A}(i-s) & \text{für } i > s \\ \tilde{A}(i+n) & \text{für } i \leq s \end{cases}$$

Damit läßt sich diese Abbildung der Ergebnisbildzeilen $\tilde{B}(i)$ unter Verwendung der Gesamtzeilenzahl m von $\tilde{A}$ bzw. $\tilde{B}$, m = n + k + 1 = n + s formulieren als zyklische Verschiebung der Indizes um s Plätze.

$$\tilde{B}(i) \leftarrow \begin{cases} \tilde{A}(i-s) & \text{für } (i-s) > 0 \\ \tilde{A}(i-s+m) & \text{für } (i-s) \leq 0 \end{cases}$$

Das entspricht im wesentlichen einer Modulo-Arithmetik, außer für den Fall i - s = 0. Dies kann dadurch korrigiert werden, daß die Indizes nicht mehr über 1, ..., m sondern über 0, ..., m - 1 laufen. Die entsprechenden Adreßtabellen sollen anstelle $\tilde{A}$ bzw. $\tilde{B}$ nun $\hat{A}$ bzw. $\hat{B}$ heißen, wobei $\hat{A}(i) = \tilde{A}(i+1)$ und $\hat{B}(i) = \tilde{B}(i+1)$ mit i = 0, 1, ..., m - 1 gilt.

Die zyklische Verschiebung zwischen Eingangsbildzeilen $\hat{A}(i)$ und Ergebnisbildzeilen $\hat{B}(i)$ kann dann mit Verwendung des Modulo-Operators als

$$\hat{B}(i) \leftarrow \hat{A}((i-s) \bmod m)$$

oder abgekürzt mit dem Verschiebungsopertor V = $\hat{A}((i - s) \bmod m)$ als $\hat{B} = V(\hat{A})$ dargestellt werden.

Wird der Bildoperator O itertiert, so tauschen $\hat{A}$ und $\hat{B}$ bei jeder Iteration die Rollen, wobei nun der Index bei $\hat{A}$ und $\hat{B}$ die Nummer der Iteration anzeigen soll.

Zuerst werden die Ergebnisbildzeilen $\hat{B}_1(i)$ des ersten Ergebnisbildes gegen die Eingangsbildzeilen $\hat{A}_1(i)$ des Eingangsbildes 6 verschoben, $\hat{B}_1 = V(\hat{A}_1)$, dann der Bildoperator O angewendet, $\hat{B}_1 = O(\hat{A}_1)$, anschließend wird das erste Ergebnisbild zum neuen Eingangsbild $\hat{A}_2 = \hat{B}_1$, und werden die Ergebnisbildzeilen $\hat{B}_2(i)$ des zweiten Ergebnisbildes gegen die Eingangsbildzeilen $\hat{A}_2(i)$ des neuen Eingangsbildes verschoben, $\hat{B}_2 = V(\hat{A}_2)$, und wird wiederum der Bildoperator O angewendet, $\hat{B}_2 = O(\hat{A}_2)$, etc.

Wie dieser Beschreibung entnommen werden kann, müssen vor Anwendung des Operators O für jede Iteration stets nur die Adreßtabellen $\hat{A}$, $\hat{B}$, die auf die Daten- und Zusatzzeilen d, z in den Speicherbereichen 8, 9 verweisen, aktualisiert werden, was sehr schnell durchführbar ist.

Nachdem der Bildoperator O keinen Einfluß auf die Zeilenverschiebung hat, kommt diese lediglich durch eine Verkettung der Verschiebungsoperatoren V zustande und kann daher nach *l* Iterationen dargestellt werden als

$$\hat{B}_l(i) = V(V(...V(\hat{A}_1(i)))) = \hat{A}_1((i - ls) \, mod \, m) \qquad (2)$$

Nach Abschluß der Iterationen enthält die Adreßtabelle $\hat{B}_l$ in den Adreßfeldern $\hat{B}_l(i)$ die Adressen der Ergebnisbildzeilen für die Bildzeilenindizes i = 0, ..., n -1. Diese Zeilen müssen in die Zieladressen kopiert werden, welche durch die Adreßfelder $\hat{A}_1(i)$ der ursprünglichen Adreßtabelle $\hat{A}_1$ vorgeben werden

$$\hat{B}_l(i) \Rightarrow \hat{A}_1(i) \qquad (3),$$

ohne daß Zeilen überschrieben werden, welche noch als Quellzeilen gebraucht werden. Wegen der wiederholten Verwendung der Adreßtabelle $\hat{A}$ in den Iterationen steht allerdings $\hat{A}_1$ im Allgemeinen nicht mehr zur Verfügung, es kann jedoch leicht aus $\hat{B}_l$ durch Umkehrung der Formel (2) zurückgewonnen werden, $\hat{A}_1(i) \leftarrow \hat{B}_l((i + ls) \, mod \, m)$.

Die Idee für das ökonomische Zurückkopieren ist, zunächst eine Reservezeile zu finden, die im Bereich der gültigen Bildindizes $\hat{A}_1(i), 0 \le i < n$ liegt. Sie enthält keine gültigen Ergebnisbilddaten und darf daher überschrieben werden. Die Reservezeile wird als erste Kopier-Zielzeile verwendet, dann wird daraus die zugehörige Kopier-Quellzeile ermittelt und die Kopieroperation durchgeführt. Danach kann die nun nicht mehr benötigte Kopier-Quellzeile als neue Kopier-Zielzeile genommen werden, ihre Kopier-Quellzeile berechnet und eine weitere Kopieroperation ausgeführt werden, und so fort. Die Kette von Kopieroperationen endet, wenn die erste Kopier-Zielzeile zuletzt als Kopier-Quellzeile berechnet wird, denn die Kette ist immer zyklisch.

Im günstigsten Falle wurden dann sämtliche Indizes i = 0, ..., m - 1 durchlaufen und in $\hat{A}_1$ steht das gewünschte Ergebnis. Es kann jedoch - abhängig von l, s, m - auch vorkommen, daß eine Kette geschlossen wird, ohne daß alle Indizes durchlaufen wurden. In diesem Fall gibt es mehrere gleich lange zyklische Ketten, die in ihrer Gesamtheit wieder alle Indizes überdecken.

Wird andererseits keine Reservezeile im Bereich der gültigen Bildindizes gefunden, so sind die Reservezeilen zwangsläufig mit den Zusatzzeilen identisch, die Verschiebung ist gemäß Formel (2) (i - ls) mod m = i und daher liegen alle Bildzeilen bereits an den gewünschten Adressen, so daß keinerlei Kopiervorgänge nötig sind.

Um die $\hat{A}_l(i)$ mit den $\hat{A}_1(j)$ zu koppeln, verwendet man die folgende Identität, welche aus Formel (2) abgeleitet werden kann

$$\hat{B}_l(i) \equiv \hat{A}_1(j) \qquad mit \qquad j = (i - v) \, mod \, m \qquad und \qquad v = ls \qquad (4)$$

Zur Bestimmung einer Reservezeile nimmt man die erste Zusatzzeile, welche die Adresse $\hat{A}_1(n)$ hat und verschoben als Reservezeile in $\hat{B}_l(n) \equiv \hat{A}_1(z_0)$ steht, wobei nach Formel (4) $z_0$ = (n - v) mod m. Wenn $z_0 \notin \{0,..., n - 1\}$ so werden die weiteren Zusatzzeilen n + 1, ..., m - 1 entsprechend untersucht. Erfüllt kein $z_0$ die Bedingung, so braucht nicht kopiert zu werden, ansonsten wird $\hat{A}_1(z_0)$ die erste Kopier-Zielzeile, und nach Formel (3) ist $\hat{B}_1(z_0)$ die erste Kopier-Quellzeile. Diese entspricht nach Formel (4) $\hat{B}_l(z_0) \equiv \hat{A}_1(q_0)$ mit $q_0$ = ($z_0$ - v) mod m. Die erste Kopieroperation ist also $\hat{B}_l(z_0) \Rightarrow \hat{A}_1(z_0)$ oder (ohne $\hat{B}_l$) äquivalent $\hat{A}_1(q_0) => \hat{A}_1(z_0)$. Die nächste Kopieroperation hat als Ziel $\hat{A}_1(z_1)$, was die vorherige Quelle $\hat{A}_1(q_0)$ ist und als Quelle $\hat{B}_l(z_1) \equiv \hat{A}_1(q_1)$ hat, mit $q_1$ = ($z_1$ - v) mod m = ($q_0$ - v) mod m, so daß dann $\hat{A}_1(q_1) \Rightarrow \hat{A}_1(z_1)$ kopiert wird, und so fort.

Da jeweils die alte Quellzeile zur neuen Zielzeile wird, also $z_{p+1} = q_p$, ergibt sich zusammen mit Formel (3) der Rekursionsschritt für die Quellzeilen-Indizes als $q_{p+1}$ = ($q_p$ - v) mod m und damit der p-te Quellzeilen-Index als $q_p$ = ($q_0$ - pv) mod m für p= 0,1,...

Die Kette der Quellzeilen wird nach r Schritten geschlossen, wenn $q_r = q_0$, also ($q_0$ - rv) mod m = $q_0$ und daher bei rv ≡ 0 (mod m), also wenn bei rv/m der Rest 0 bzw. wenn rv mod m = 0 ist. Für v ≡ 0 (mod m), also wenn bei v/m der Rest 0 bzw. v mod m = 0 ist, liegt der Fall vor, daß alle Zeilen bereits an den richtigen Adressen stehen und nichts kopiert werden muß. Im anderen Falle schreibt man rv ≡ 0 (mod m) als ganzzahlige Gleichung rv = xm und bezeichnet mit t den größten gemeinsamen Teiler ggT von v und m, t = ggT(v,m). Dann ist die kleinste Lösung r = m/t, x = v/t. Ist t = 1, so ist die Kettenlänge r = m und die Kette schließt sich erst, nachdem alle m Indizes (einschließlich aller Reservezeilen)

durchlaufen wurden. Für $t > 1$ ist die Länge der Kette $r = m/t$ und es gibt t unabhängige geschlossene Ketten.

**[0068]** Das Zurückkopieren kann in die folgenden Schritte aufgeteilt werden:

1. Bestimmung der Kopierketten
2. Bestimmung der verwendbaren Reservezeilen
3. Abarbeiten einer Kopierkette
4. Rückgabe der Ergebnisdaten
5. Freigabe der Zusatzzeilen

**[0069]** Der Schritt 1 der Bestimmung läßt sich in folgende Fälle unterteilen:

Fall 1 ist ein seltener Sonderfall. Er tritt auf wenn $v \equiv 0 \pmod{m}$ ist. Die Bildzeilen sind bereits am richtigen Ort, es braucht nichts kopiert zu werden.

Fall 2 ergibt sich falls $v \bmod m \neq 0$ und $t = 1$. Es gibt wenigstens eine verwendbare Reservezeile und die einzige Kopierkette läuft über alle Indizes 0, 1, ..., m - 1.

Fall 3 ergibt sich falls $v \bmod m \neq 0$ und $t > 1$. Es gibt t disjunkte Kopierketten, jede mit der Länge $r = m/t$. Man kann diesen Fall noch in zwei Unterfälle 3a und 3b unterscheiden.

**[0070]** Im Fall 3a ist die Anzahl der verwendbaren Reservezeilen wenigstens so groß wie die Anzahl der Kopierketten. Dann wird jeder Kopierkette eine eigene Reservezeile als erstes Kopierziel zugeordnet, wobei die Reservezeilenindizes dicht liegen müssen. Die Abarbeitung jeder Kopierkette geschieht dann analog zu Fall 2, nur mit kürzerer Kettenlänge.

**[0071]** Unter "dicht liegend" wird hier verstanden, daß die Indizes der Reservezeilen aufsteigend ohne Lücke sein müssen, also z.B. 3, 4, 0 bei einer Indizierung mit mod 5, aber nicht 1, 3, 4 bei dieser Indizierung, denn da ist eine Lücke bei 2. Dies liegt darin begründet, daß die Startindizes von Kopierketten kongruent mod t sind, und wenn eine Lücke vorhanden ist, erhält man bei einem anderen Startindex eine Kopierkette nochmals.

**[0072]** Im Fall 3b reicht die Anzahl der verwendbaren Reservezeilen nicht für alle Kopierketten aus. Man hebt sich daher eine Reservezeile auf und verfährt mit den restlichen Reservezeilen und den zugehörigen Kopierketten wie im Fall 3a. Für alle der dann noch nicht abgearbeiteten Kopierketten - bis auf eine letzte, die wieder entsprechend Fall 3a behandelt wird - werden zwei zusätzliche Kopierschritte nötig, um die zyklische Kette aufzubrechen. Dazu wählt man ein Element der Kette, das in keiner anderen Kopierkette vorkommt, als erstes Kopierziel, kopiert seinen Inhalt in die Reservezeile, arbeitet die Kette ab und kopiert schließlich die Reservezeile in die letzte Kopierquelle.

**[0073]** Zur Bestimmung der verwendbaren Reservezeilen (Schritt 2), welche als erstes Kopierziel dienen sollen, berechnet man für alle Zusatzzeilenindizes $i \in \{n,..., m - 1\}$ den entsprechenden Index $z_i$ in $\hat{A}_1$ als $z_i = (i - v) \bmod m$. Gilt $0 \leq z_i < n$ so kann $z_i$ als Kopierziel verwendet werden.

**[0074]** Zum Abarbeiten einer Kopierkette (Schritt 3) wird der erste Kopierzielindex $z_0$ aus den verwendbaren Reservezeilen, die im Schritt 2 bestimmt wurden, gewählt. Dann wird der erste Kopierquellindex $q_0 = (z_0 - v) \bmod m$ bestimmt und die erste Kopieroperation $\hat{A}_1(q_0) \Rightarrow \hat{A}_1(z_0)$ durchgeführt.

**[0075]** In den folgenden Schritten nutzt man die Rekursion $z_{p+1} = q_p$ und $q_{p+1} = (q_p - v) \bmod m$, kopiert $\hat{A}_1(q_{p+1}) \Rightarrow \hat{A}_1(z_{p+1})$ und wiederholt solange bis r - 1 Kopierschritte gemacht wurden. Die entsprechende Kopierkette wird dann geschrieben als

$$\hat{A}_1(z_0) \Leftarrow \hat{A}_1(q_0) \Leftarrow \hat{A}_1(q_1) \Leftarrow \ldots \Leftarrow \hat{A}_1(q_{r-1})$$

**[0076]** Die Kopierketten können Reservezeilen enthalten, die nicht als erstes Kopierziel verwendet werden. Ist eine solche Reservezeile Quelle einer Kopieroperation innerhalb der Kette, so kann die Kopieroperation aus der Kette entfernt werden, um Rechenzeit zu sparen. Ähnlich kann man Reservezeilen, die als Quelle am Ende einer Kette stehen, ganz weggelassen. Solche unnötigen Teile werden in der Kopierkette mit { ... } markiert.

**[0077]** Schritt 4: Nach dem Zurückkopieren stehen in jedem der Fälle die gültigen Ergebnisbilddaten in der Reihenfolge im Speicher, wie sie die Adreßtabelle $\hat{A}_1$ bzw. $\tilde{A}$ für die Indizes 0, 1, ..., n - 1 bzw. 1, 2, ..., n angibt. Weil $\tilde{A}$ durch Kopieren der Originaladreßtabelle A entstanden ist, zeigt auch A in der richtigen Reihenfolge auf die gültigen Ergebnisbilddaten, ohne daß es selbst verändert wurde.

**[0078]** Schritt 5: Die Adressen der Zusatzzeilen sind in $\hat{A}_1(i)$ für i = n, ..., n + k bzw. $\tilde{A}(i)$ für i = n + 1, ..., n + k + 1 gespeichert, nachdem $\hat{A}_1$ aus $\hat{B}_l$ rekonstruiert wurde. Deren gültige Inhalte wurden durch das Zurückkopieren gerettet. Daher können die Zusatzzeilen einfach durch Angabe ihrer Adressen in $\hat{A}_1$ bzw. $\tilde{A}$ an die Speicherverwaltung zurück-

gegeben werden. Anschließend können auch die Adreßtabellen $\hat{A}$ und $\hat{B}$ bzw. $\tilde{A}$ und $\tilde{B}$ freigegeben werden.

In den folgenden Beispielen werden Tabellen verwendet, um eine Übersicht für Adressen und Daten zu geben. Jede Spalte entspricht einer Zeilen-Speicheradresse. In der zweiten Zeile ist die entsprechende Eingangsbildzeile d angegeben, in der dritten Zeile die Ergebnisbildzeile d', mit welcher diese Zeile überschrieben wurde. Die Zusatzzeilen sind als z, die Reservezeilen als z' gekennzeichnet. Die erste und die letzte Zeile der Tabellen enthalten die Elemente der Adreßtabellen $\hat{A}_1$ bzw. $\hat{B}_l$, welche auf diese Zeilen zeigen. Die angegebenen Kopierketten werden von links nach rechts abgearbeitet. Führt man diese aus, so erkennt man, daß alle gültigen Ergebnisbildzeilen an die richten Adressen kopiert werden.

Die bisher verwendeten und auch in nachfolgenden Tabellen angegebenen Parameter sollen hier kurz zusammengefaßt werden:

- k: Parameter zur Beschreibung der Zeilenzahl des Bildoperators O, seine Zeilenzahl ist maximal $2k + 1$
- n: Anzahl der Zeilen des Bildes
- l: Anzahl der Iterationen des Bildoperators O
- s: Anzahl der Zusatzzeilen, gleichzeitig auch Zeilenverschiebung pro Iteration, $s = k + 1$
- m: Gesamtzahl der Bildzeilen und Zusatzzeilen, $m = n + s = n + k + 1$
- v: Gesamte Zeilenverschiebung über alle Iterationen, $v = ls = l(k + 1)$
- t: Anzahl der unabhängigen Kopierketten, $t = ggT(v,m) = ggT(l(k + 1), n + k + 1)$

-

r: Länge einer Kopierkette, $r = m/t = \dfrac{n+k+1}{ggT(\,l(\,k+1),n+k+1\,)}$

Beispiel 1 mit $k = 1$, $n = 7$, $l = 9$ und daraus $s = 2$, $m = 9$, $v = 18$, $t = 9$, $r = 1$

| $\hat{A}_1(0)$ | $\hat{A}_1(1)$ | $\hat{A}_1(2)$ | $\hat{A}_1(3)$ | $\hat{A}_1(4)$ | $\hat{A}_1(5)$ | $\hat{A}_1(6)$ | $\hat{A}_1(7)$ | $\hat{A}_1(8)$ |
|---|---|---|---|---|---|---|---|---|
| $d_1$ | $d_2$ | $d_3$ | $d_4$ | $d_5$ | $d_6$ | $d_7$ | $z_1$ | $z_2$ |
| $d'_1$ | $d'_2$ | $d'_3$ | $d'_4$ | $d'_5$ | $d'_6$ | $d'_7$ | $z'_1$ | $z'_2$ |
| $\hat{B}_9(0)$ | $\hat{B}_9(1)$ | $\hat{B}_9(2)$ | $\hat{B}_9(3)$ | $\hat{B}_9(4)$ | $\hat{B}_9(5)$ | $\hat{B}_9(6)$ | $\hat{B}_9(7)$ | $\hat{B}_9(8)$ |

Hier ist $v \equiv 0 \pmod m$ und damit liegt Fall 1 vor, wo bereits alle Ergebnisbildzeilen an der richtigen Adresse stehen. Es gibt keine verwendbaren Reservezeilen, aber es werden auch keine Kopieroperationen benötigt.

**Beispiel 2** mit $k = 1$, $n = 5$, $l = 3$ und daraus $s = 2$, $m = 7$, $v = 6$, $t = 1$, $r = 7$

| $\hat{A}_1(0)$ | $\hat{A}_1(1)$ | $\hat{A}_1(2)$ | $\hat{A}_1(3)$ | $\hat{A}_1(4)$ | $\hat{A}_1(5)$ | $\hat{A}_1(6)$ |
|---|---|---|---|---|---|---|
| $d_1$ | $d_2$ | $d_3$ | $d_4$ | $d_5$ | $z_1$ | $z_2$ |
| $z'_2$ | $d'_1$ | $d'_2$ | $d'_3$ | $d'_4$ | $d'_5$ | $z'_1$ |
| $\hat{B}_3(6)$ | $\hat{B}_3(0)$ | $\hat{B}_3(1)$ | $\hat{B}_3(2)$ | $\hat{B}_3(3)$ | $\hat{B}_3(4)$ | $\hat{B}_3(5)$ |

Die Reservezeile $\hat{B}_l(n) = \hat{B}_3(5) \equiv \hat{A}_1(6)$ ist nicht als erstes Kopierziel verwendbar, da der Index 6 außerhalb der gültigen $\hat{A}_1$ Bildzeilenindizes 0, ..., 4 liegt, jedoch kann $\hat{B}_l(n + 1) = \hat{B}_3(6) \equiv \hat{A}_1(0)$ verwendet werden. Wegen $t = 1$ liegt der Fall 2 vor und es gibt nur eine Kopierkette mit in Einerschritten ansteigenden Indizes $q_{p+1} = q_p - 6 \bmod 7 = q_p + 1 \bmod 7$, also

$$\hat{A}_1(0) \Leftarrow \hat{A}_1(1) \Leftarrow \hat{A}_1(2) \Leftarrow \hat{A}_1(3) \Leftarrow \hat{A}_1(4) \Leftarrow \hat{A}_1(5) \{ \Leftarrow \hat{A}_1(6) \}$$

Daß dies ein Spezialfall ist, zeigt das folgende Beispiel 3, wo anstatt l = 3 nur ein anderes l = 5 verwendet wird.

**Beispiel 3** mit k = 1, n = 5, l = 5 und daraus s = 2, m = 7, v = 10, t = 1, r = 7

| $\hat{A}_1(0)$ | $\hat{A}_1(1)$ | $\hat{A}_1(2)$ | $\hat{A}_1(3)$ | $\hat{A}_1(4)$ | $\hat{A}_1(5)$ | $\hat{A}_1(6)$ |
|---|---|---|---|---|---|---|
| $d_1$ | $d_2$ | $d_3$ | $d_4$ | $d_5$ | $z_1$ | $z_2$ |
| $d'_4$ | $d'_5$ | $z'_1$ | $z'_2$ | $d'_1$ | $d'_2$ | $d'_3$ |
| $\hat{B}_5(3)$ | $\hat{B}_5(4)$ | $\hat{B}_5(5)$ | $\hat{B}_5(6)$ | $\hat{B}_5(0)$ | $\hat{B}_5(1)$ | $\hat{B}_5(2)$ |

Beide Reservezeilen $\hat{B}_l(n) = \hat{B}_5(5) \equiv \hat{A}_1(2)$ und $B_l(n+1) = \hat{B}_5(6) \equiv \hat{A}_1(3)$ können als erste Kopierziele verwendet werden. Wegen t = 1 handelt es sich um Fall 2, es gibt nur eine Kopierkette mit $q_{p+1} = q_p - 10 \bmod 7 = q_p + 4 \bmod 7$, und als erstes Kopierziel wird $\hat{A}_1(2)$ verwendet, wobei der Kopierschritt von $\hat{A}_1(3)$ nach $\hat{A}_1(6)$ nicht ausgeführt wird, wie durch {...} angedeutet ist.

$$\hat{A}_1(2) \Leftarrow \hat{A}_1(6) \{ \Leftarrow \} \hat{A}_1(3) \Leftarrow \hat{A}_1(0) \Leftarrow \hat{A}_1(4) \Leftarrow \hat{A}_1(1) \Leftarrow \hat{A}_1(5)$$

Auch hier kommen alle Indizes einschließlich der Reservezeilenindizes in der Kette vor.

**Beispiel 4** mit k = 1, n = 6, l = 3 und daraus s = 2, m = 8, v = 6, t = 2, r = 4

| $\hat{A}_1(0)$ | $\hat{A}_1(1)$ | $\hat{A}_1(2)$ | $\hat{A}_1(3)$ | $\hat{A}_1(4)$ | $\hat{A}_1(5)$ | $\hat{A}_1(6)$ | $\hat{A}_1(7)$ |
|---|---|---|---|---|---|---|---|
| $d_1$ | $d_2$ | $d_3$ | $d_4$ | $d_5$ | $d_6$ | $z_1$ | $z_2$ |
| $z'_1$ | $z'_2$ | $d'_1$ | $d'_2$ | $d'_3$ | $d'_4$ | $d'_5$ | $d'_6$ |
| $\hat{B}_3(6)$ | $\hat{B}_3(7)$ | $\hat{B}_3(0)$ | $\hat{B}_3(1)$ | $\hat{B}_3(2)$ | $\hat{B}_3(3)$ | $\hat{B}_3(4)$ | $\hat{B}_3(5)$ |

Die Reservezeilen $\hat{B}_l(n) = \hat{B}_3(6) \equiv \hat{A}_1(0)$ und $\hat{B}_l(n+1) = \hat{B}_3(7) \equiv \hat{A}_1(1)$ sind beide verwendbar, und da die Zahl der Kopierketten t = 2 beträgt, liegt der Fall 3a vor. Die Kopierketten lauten entsprechend

$$\hat{A}_1(0) \Leftarrow \hat{A}_1(2) \Leftarrow \hat{A}_1(4) \Leftarrow \hat{A}_1(6)$$

$$\hat{A}_1(1) \Leftarrow \hat{A}_1(3) \Leftarrow \hat{A}_1(5) \Leftarrow \hat{A}_1(7)$$

**Beispiel 5** mit k = 1, n = 7, l = 3 und daraus s = 2, m = 9, v = 6, t = 3, r = 3

| $\hat{A}_1(0)$ | $\hat{A}_1(1)$ | $\hat{A}_1(2)$ | $\hat{A}_1(3)$ | $\hat{A}_1(4)$ | $\hat{A}_1(5)$ | $\hat{A}_1(6)$ | $\hat{A}_1(7)$ | $\hat{A}_1(8)$ |
|---|---|---|---|---|---|---|---|---|
| $d_1$ | $d_2$ | $d_3$ | $d_4$ | $d_5$ | $d_6$ | $d_7$ | $z_1$ | $z_2$ |
| $d'_7$ | $z'_1$ | $z'_2$ | $d'_1$ | $d'_2$ | $d'_3$ | $d'_4$ | $d'_5$ | $d'_6$ |
| $\hat{B}_3(6)$ | $\hat{B}_3(7)$ | $\hat{B}_3(8)$ | $\hat{B}_3(0)$ | $\hat{B}_3(1)$ | $\hat{B}_3(2)$ | $\hat{B}_3(3)$ | $\hat{B}_3(4)$ | $\hat{B}_3(5)$ |

Die Reservezeilen $\hat{B}_I$ (n) = $\hat{B}_3$ (7) ≡ $\hat{A}_1$ (1) und $\hat{B}_I$ (n + 1) = $\hat{B}_3$ (8) ≡ $\hat{A}_1$ (2) sind beide verwendbar, doch die Zahl der Kopierketten ist t = 3, so daß der Fall 3b vorliegt. Die erste Kopierkette soll als Ziel die Reservezeile $\hat{A}_1$ (1) verwenden und lautet

$$\hat{A}_1(1) \Longleftarrow \hat{A}_1(4) \Longleftarrow \hat{A}_1(7)$$

Die zweite Kopierkette verwendet die Reservezeile $\hat{A}_1$(2) als Zwischenspeicher. Das Element, an dem eine Kette aufgebrochen wird, darf keine Reservezeile sein oder in einer anderen Kopierkette vorkommen, so daß $\hat{A}_1$(2), $\hat{A}_1$ (1), $\hat{A}_1$(4) und $\hat{A}_1$(7) für die zweite Kopierkette nicht verwendet werden können. Gewählt wird $\hat{A}_1$(3), so daß die zweite Kopierkette lautet

$$\hat{A}_1(2) \Longleftarrow \hat{A}_1(3) \Longleftarrow \hat{A}_1(6) \Longleftarrow \hat{A}_1(0) \Longleftarrow \hat{A}_1(2)$$

Die dritte und damit letzte Kopierkette verwendet die nun nicht mehr als Zwischenspeicher benötigte Reservezeile $\hat{A}_1$(2) als erstes Kopierziel und lautet daher

$$\hat{A}_1(2) \Longleftarrow \hat{A}_1(5) \Longleftarrow \hat{A}_1(8)$$

**Patentansprüche**

1. Verfahren zur Erzeugung eines Ergebnisbildes durch Anwenden eines Operators auf ein Eingangsbild mit n Zeilen, bei dem
   das Eingangsbild in einen n Datenzeilen aufweisenden ersten Bereich eines Datenspeichers abgelegt wird und der Operator eine Ausdehnung von g Zeilen aufweist, wobei g größer oder gleich zwei Zeilen und kleiner oder gleich 2k + 1 Zeilen ist,
   **dadurch gekennzeichnet, daß**
   k + 1 Zusatzzeilen eines zweiten Bereiches des Datenspeichers reserviert werden,
   wobei der Operator aus Daten von jeweils g Datenzeilen die Daten für jeweils eine Zeile des Ergebnisbildes oder eines Zwischenbildes zur Erzeugung des Ergebnisbildes berechnet und so in den Daten- und Zusatzzeilen zeilenweise ablegt, daß die berechneten Daten zunächst in den Zusatzzeilen und danach in den Datenzeilen, die der Operator für die Berechnung weiterer Zeilen des Ergebnisbildes oder des Zwischenbildes nicht mehr benötigt, abgelegt werden.

2. Verfahren nach Anspruch 1, bei dem die im Datenspeicher abgelegten Ergebnisbildzeilen so umkopiert werden, daß sie der Reihe nach in den Datenzeilen gespeichert sind, wobei insbesondere nach dem Kopieren die Zusatzzeilen freigeben werden.

3. Verfahren nach Anspruch 1 oder 2, bei dem der Operator über eine erste Adreßtabelle auf die im Datenspeicher abgelegten Eingangsbilddaten zugreift und über eine zweite Adreßtabelle die Daten des Ergebnis- bzw. Zwischenbildes im Datenspeicher ablegt, wobei die beiden Adreßtabellen zueinander um (k + 1) Zeilen zyklisch verschoben sind.

4. Verfahren nach Anspruch 3, bei dem nach Erzeugung des Zwischenbildes der Operator iterativ (/ - 1) mal auf das jeweils erzeugte Zwischenbild angewendet wird, wobei bei jeder Iteration eine erste und eine zweite Adreßtabelle verwendet wird, die gegenüber der jeweiligen ersten und zweiten Adreßtabelle des unmittelbar vorhergehenden Iterationsschrittes um jeweils (k + 1) Zeilen zyklisch verschoben sind.

5. Verfahren nach einem der Ansprüche 1 bis 4, bei dem eine oder mehrere zyklische Kopierketten bestimmt werden, die alle jeweils einmal zu durchlaufen sind, um die Ergebnisbildzeilen der Reihe nach in den Datenzeilen zu speichern, wobei insbesondere bei jeder Kopierkette eine Datenzeile, in der keine Daten des Ergebnisbildes abgelegt sind, als erste Zielzeile für die Kopierkette ausgewählt wird.

**6.** Verfahren nach Anspruch 5, bei dem der Wert von [*l*(k + 1)]mod(n + k + 1) als Parameter w berechnet wird, wobei, wenn w = 0, kein Kopieren der Ergebnisbildzeilen notwendig ist, da diese bereits der Reihe nach in den Datenzeilen abgespeichert sind, wenn w ≠ 0 und wenn der größte gemeinsame Teiler t von *l*(k + 1) und (n + k + 1) gleich 1 ist, eine einzige Kopierkette über alle Daten- und Zusatzzeilen bestimmt wird, und wenn w ≠ 0 und t > 1 ist, t disjunkte Kopierketten mit jeweils der Länge $\dfrac{n+k+1}{t}$ bestimmt werden, und bei w ≠ 0 die bestimmte(n) Kopierkette(n) abgearbeitet wird/werden.

**7.** Verfahren nach Anspruch 1, bei dem nach Berechnung aller Zeilen des Zwischenbildes auf das Zwischenbild ein weiterer Operator, der eine Ausdehnung von g' Zeilen aufweist, wobei g' größer oder gleich zwei Zeilen und kleiner oder gleich 2k + 1 Zeilen ist, so angewendet wird, daß aus Daten von jeweils g' Zeilen des Zwischenbildes jeweils eine Zeile des Ergebnisbildes oder eines weiteren Zwischenbildes berechnet und so in den Daten- und Zusatzzeilen zeilenweise abgelegt wird, daß die berechneten Daten zunächst in den Daten- und Zusatzzeilen, die keine Zeilen des Zwischenbildes enthalten, und danach in den Daten- und Zusatzzeilen, die der weitere Operator für die Berechnung weiterer Zeilen des Ergebnisbildes oder des weiteren Zwischenbildes nicht mehr benötigt, abgelegt werden.

**8.** Verfahren nach einem der obigen Ansprüche, bei dem das Ergebnisbild n Zeilen aufweist.

**9.** Vorrichtung zur Erzeugung eines Ergebnisbildes durch Anwenden eines Operators auf ein Eingangsbild mit n Zeilen, die einen Datenspeicher (4) und eine Recheneinheit (5) aufweist, die
das Eingangsbild in einen n Datenzeilen aufweisenden ersten Bereich (8) des Datenspeichers (4) ablegt und
einen Operator mit einer Ausdehnung von g Zeilen, wobei g größer oder gleich zwei Zeilen und kleiner oder gleich 2k + 1 Zeilen ist, auf die Daten des Eingangsbildes anwendet,
**dadurch gekennzeichnet, daß** die Vorrichtung k + 1 Zusatzzeilen eines zweiten Bereiches (9) des Datenspeichers (4) reserviert und
den Operator so auf die Daten des Eingangsbildes anwendet,
daß der Operator aus Daten von jeweils g Bildzeilen die Daten für jeweils eine Zeile des Ergebnisbildes oder eines Zwischenbildes zur Erzeugung des Ergebnisbildes berechnet und so in den Daten- und Zusatzzeilen zeilenweise ablegt, daß die berechneten Daten zunächst in den Zusatzzeilen und danach in den Datenzeilen, die der Operator für die Berechnung weiterer Zeilen des Ergebnisbildes oder des Zwischenbildes nicht mehr benötigt, abgelegt werden.

**10.** Vorrichtung nach Anspruch 9, bei der das Kopieren so durchgeführt wird, daß die Ergebnisbildzeilen der Reihe nach in den Datenzeilen gespeichert sind, und/oder bei der nach dem Kopieren die Zusatzzeilen freigeben werden.

**11.** Vorrichtung nach Anspruch 9 oder 10, bei der der Operator über eine erste Adreßtabelle (Ã) auf die im Datenspeicher (4) abgelegten Eingangsbilddaten zugreift und über eine zweite Adreßtabelle (B̃) die Daten des Ergebnis- bzw. Zwischenbildes im Datenspeicher (4) ablegt, wobei die beiden Adreßtabellen (Ã, B̃) zueinander um (k + 1) Zeilen zyklisch verschoben sind, und wobei insbesondere nach Erzeugung des Zwischenbildes der Operator iterativ (*l* - 1) mal auf das jeweils erzeugte Zwischenbild angewendet und für jede Iteration eine erste und eine zweite Adreßtabelle verwendet wird, die gegenüber der jeweiligen ersten und zweiten Adreßtabelle des unmittelbar vorhergehenden Iterationsschrittes um jeweils (k + 1) Zeilen zyklisch verschoben sind.

**12.** Vorrichtung nach einem der Ansprüche 9 bis 11, bei der eine oder mehrere zyklische Kopierketten bestimmt werden, die alle jeweils einmal zu durchlaufen sind, um die Ergebnisbildzeilen der Reihe nach in den Datenzeilen des ersten Bereiches (8) zu speichern, wobei insbesondere bei jeder Kopierkette eine Datenzeile, in der keine Daten des Ergebnisbildes abgelegt sind, als erste Zielzeile für die Kopierkette ausgewählt wird.

**13.** Vorrichtung nach Anspruch 12, bei der der Wert von [*l*(k + 1)]mod(n + k + 1) als Parameter w berechnet wird, wobei, wenn w = 0, kein Kopieren der Ergebnisbildzeilen notwendig ist, da diese bereits der Reihe nach in den Datenzeilen abgespeichert sind, wenn w ≠ 0 und wenn der größte gemeinsame Teiler t von *l*(k + 1) und (n + k + 1) gleich 1 ist, eine einzige Kopierkette über alle Daten- und Zusatzzeilen bestimmt wird, und wenn w ≠ 0 und t > 1 ist, t disjunkte Kopierketten mit jeweils der Länge $\dfrac{n+k+1}{t}$ bestimmt werden, und bei w ≠ 0 die bestimmte(n) Kopierkette(n) abgearbeitet wird/werden.

14. Vorrichtung nach Anspruch 9, bei der die Recheneinheit (5) nach Berechnung aller Zeilen des Zwischenbildes auf das Zwischenbild einen weiteren Operator, der eine Ausdehnung von g' Zeilen aufweist, wobei g' größer oder gleich zwei Zeilen und kleiner oder gleich 2k + 1 Zeilen ist, so anwendet, daß aus Daten von jeweils g' Zeilen des Zwischenbildes jeweils eine Zeile des Ergebnisbildes oder eines weiteren Zwischenbildes berechnet und so in den Daten- und Zusatzzeilen zeilenweise abgelegt wird, daß die berechneten Daten zunächst in den Daten- und Zusatzzeilen, die keine Zeilen des Zwischenbildes enthalten, und danach in den Daten- und Zusatzzeilen, die der Operator bzw. der weitere Operator für die Berechnung weiterer Zeilen des Ergebnisbildes oder des weiteren Zwischenbildes nicht mehr benötigt, abgelegt werden.

15. Vorrichtung nach einem der Ansprüche 9 bis 14, bei der das Ergebnisbild n Zeilen aufweist.

**Claims**

1. Method for generating a result image by applying an operator to an input image having n lines, wherein the input image is stored in a first region of a data memory having n data lines and the operator comprises an extent of g lines, wherein g is greater than or equal to two lines and less than or equal to 2k + 1 lines,
   **characterised in that**
   k + 1 additional lines of a second region of the data memory are reserved, wherein the operator calculates from each set of g data lines the data for each respective line of the result image or an intermediate image for generating the result image and stores said data line-by-line in the data and additional lines so that the calculated data are first stored in the additional lines and then in the data lines that the operator no longer requires for calculating further lines of the result image or the intermediate image.

2. Method according to claim 1, wherein the result image lines stored in the data memory are copied such so that they are stored in sequence in the data lines, wherein, in particular after the copying, the additional lines are released.

3. Method according to claim 1 or 2, wherein the operator accesses input image data stored in the data memory via a first address table and stores the data of the result or intermediate image in the data memory via a second address table, wherein the two address tables are shifted cyclically with respect to each other by (k + 1) lines.

4. Method according to claim 3, wherein, after the generation of the intermediate image, the operator is applied iteratively (l - 1) times to the respective intermediate image generated, wherein, on each iteration, a first and a second address table are used, which are shifted cyclically by (k + 1) lines in each case with respect to the respective first and second address table of the directly preceding iteration step.

5. Method according to any one of claims 1 to 4, wherein one or more cyclic copy chains are determined, which are all to be respectively passed through in order to store the result image lines in sequence in the data lines, wherein in particular for each copy chain, a data line in which no data of the result image are stored is selected as the first target line for the copy chain.

6. Method according to claim 5, wherein the value of $[l(k + 1)]\mod(n + k + 1)$ is calculated as a parameter w, wherein, when w = 0, it is not necessary to copy the result image lines since these are already stored in sequence in the data lines, when w ≠ 0 and when the largest common divisor t of $l(k + 1)$ and $(n + k + 1)$ is equal to 1, a single copy chain over all data and additional lines is determined and when w ≠ 0 and t > 1, t disjoint copy chains each with the length

$$\frac{n + k + 1}{t}$$

are determined and when w ≠ 0 the t copy chain(s) determined is/are processed.

7. Method according to claim 1, wherein, after the calculation of lines of the intermediate image, a further operator comprising an extent of g' lines, wherein g' greater than or equal to two lines and less than or equal to 2k + 1 lines, is applied to the intermediate image such that in each case a line of the result image or a further intermediate image is calculated from data of g' lines of the intermediate image in each case and stored line-by-line in the data and additional lines such that the calculated data are first stored in the data and additional lines that do not contain any lines of the intermediate image and then in the data and additional lines that the further operator no longer requires for the calculation of further lines of the result image or the further intermediate image.

8. Method according to any one of the above claims wherein the result image comprises n lines.

9. Device for generating a result image by applying an operator to an input image having n lines comprising a data memory (4) and a computing unit (5), which
stores the input image in a first region (8) of the data memory (4) having n data lines and
applies an operator with an extent of g lines, wherein g is greater than or equal to two lines and less than or equal to 2k + 1 lines, to the data of the input image,
**characterised in that** the device reserves k + 1 additional lines of a second region (9) of the data memory (4) and applies the operator to the data of the input image such that the operator calculates from data from g image lines in each case the data for each respective line of the result image or an intermediate image for generating the result image and stores said data line-by-line in the data and additional lines such that the calculated data are first stored in the additional lines and then in the data lines that the operator no longer requires for the calculation of further lines of the result image or the intermediate image.

10. Device according to claim 9, wherein the copying is performed such that the result image lines are stored in sequence in the data lines and/or wherein the additional lines are released the after the copying.

11. Device according to claim 9 or 10, wherein the operator accesses the input image data stored in the data memory (4) via a first address table ($\bar{A}$) and stores the data of the result or intermediate image in the data memory (4) via a second address table ($\tilde{B}$), wherein the two address tables ($\bar{A}$, $\tilde{B}$) are shifted cyclically with respect to each other by (k + 1) lines and wherein, in particular after the generation of the intermediate image, the operator is applied iteratively ($l$ - 1) times to the respective intermediate image generated and for each iteration a first and a second address table are used which are cyclically shifted with respect to the respective first and second address table of the directly preceding iteration step by (k + 1) lines in each case.

12. Device according to any one of claims 9 to 11, wherein one or more cyclic copy chains are determined which are all to be passed through once in order to store the result image lines in sequence in the data lines of the first region (8), wherein in particular for each copy chain, a data line in which no data of the result image are stored is selected as the first target line for the copy chain.

13. Device according to claim 12, wherein the value of $[l/(k + 1)]\mathrm{mod}(n + k + 1)$ is calculated as a parameter w, wherein, when w = 0, it is not necessary to copy the result image lines since these are already stored in sequence in the data lines, when w ≠ 0 and when the largest common divisor t of $l/(k + 1)$ and (n + k + 1) is equal to 1, a single copy chain over all data and additional lines is determined and when w ≠ 0 and t > 1, t disjoint copy chains each with the length $$\frac{n + k + 1}{t}$$ are determined and when w ≠ 0 the t copy chain(s) determined is/are processed.

14. Device according to claim 9, wherein, after the calculation of all the lines of the intermediate image, the computing unit (5) applies a further operator to the intermediate image, said operator having an extent of g' lines, wherein g' is greater than or equal to two lines and less than or equal to 2k + 1 lines, that in each a line of the result image or a further intermediate image is calculated from data of g' lines in each case of the intermediate image and stored line-by-line in the data and additional lines such that the calculated data is first stored in the data and additional lines that do not contain any lines of the intermediate image and then in the data and additional lines that the operator or the further operator no longer requires for the calculation of further lines of the result image or the further intermediate image.

15. Device according to any one of claims 9 to 14, wherein the result image has n lines.

**Revendications**

1. Procédé de production d'une image de résultat par application d'un opérateur à une image d'entrée ayant n lignes, dans lequel
l'image d'entrée est stockée dans un premier domaine, comportant n lignes de données, d'une mémoire de données, et

l'opérateur comprend une extension de g lignes, g étant supérieur ou égal à deux lignes et étant inférieur ou égal à 2k + 1 lignes,

**caractérisé en ce que** k + 1 lignes additionnelles d'un deuxième domaine de la mémoire de données sont réservées, l'opérateur calculant, à partir des données de g lignes de données, les données pour chaque ligne de l'image de résultat ou d'une image intermédiaire pour la production de l'image de résultat, et en la stockant ligne par ligne dans les lignes de données et les lignes additionnelles de telle sorte que les données calculées soient stockées d'abord dans les lignes additionnelles, puis dans les lignes de données dont l'opérateur n'a plus besoin pour le calcul de lignes supplémentaires de l'image de résultat ou de l'image intermédiaire.

2. Procédé selon la revendication 1, dans lequel les lignes de l'image de résultat stockées dans la mémoire de données sont copiées de telle sorte qu'elles soient, selon la rangée, stockées dans les lignes de données, les lignes additionnelles étant en particulier validées après l'opération de copie.

3. Procédé selon la revendication 1 ou 2, dans lequel l'opérateur accède, par l'intermédiaire d'un premier tableau d'adresses, aux données d'image de résultat stockées dans la mémoire de données, et, par l'intermédiaire d'un deuxième tableau d'adresses, stocke les données de l'image de résultat ou de l'image intermédiaire dans la mémoire de données, les deux tableaux d'adresses étant décalés d'une manière cyclique l'un par rapport à l'autre de (k + 1) lignes.

4. Procédé selon la revendication 3, dans lequel, après production de l'image intermédiaire, l'opérateur est appliqué d'une manière itérative (l - 1) fois à l'image intermédiaire produite dans chaque cas, un premier et un deuxième tableaux d'adresses étant utilisés lors de chaque itération, tableaux qui sont décalés d'une manière cyclique, dans chaque cas de (k + 1) lignes par rapport aux premier et deuxième tableaux d'adresses de l'étape d'itération immédiatement précédente.

5. Procédé selon l'une des revendications 1 à 4, dans lequel une ou plusieurs chaînes de copies cycliques sont déterminées, qui toutes doivent chacune être parcourue une fois par l'itération, pour stocker les lignes de l'image de résultat, selon la rangée, dans les lignes de données, auquel cas, pour chaque chaîne de copie, une ligne de données dans laquelle aucune donnée de l'image de résultat n'est stockée est sélectionnée comme étant la première ligne cible de la chaîne de copie.

6. Procédé selon la revendication 5, dans lequel la valeur de [l(k + 1)]mod(n + k + 1) est calculée en tant que paramètre w, auquel cas, quand w = 0, aucune copie des lignes de l'image de résultat n'est nécessaire, car ces dernières sont déjà stockées, selon la rangée, dans les lignes de données ; quand w ≠ 0 et quand le plus grand diviseur commun t de l(k + 1) et de (n + k + 1) est égal à 1, une chaîne de copie unique est déterminée sur toutes les lignes de données et les lignes additionnelles ; et, quand w ≠ 0 et t > 1, t chaînes de copie disjointes sont déterminées, chacune ayant la longueur (n + k + 1)/t, et, quand w ≠ 0, la ou les chaînes de copie déterminées sont exécutées.

7. Procédé selon la revendication 1, dans lequel, après calcul de toutes les lignes de l'image intermédiaire, on applique à l'image intermédiaire un opérateur supplémentaire, qui présente une extension de g' lignes, g' étant supérieur ou égal à deux lignes et étant inférieur ou égal à 2k + 1 lignes, de façon à calculer, à partir des données de g' lignes de l'image intermédiaire, une ligne de l'image de résultat ou d'une image intermédiaire supplémentaire, et à la stocker par lignes dans les lignes de données et les lignes additionnelles de telle sorte que les données calculées soient stockées d'abord dans les lignes de données et les lignes additionnelles qui ne contiennent pas de lignes de l'image intermédiaire, puis dans les lignes de données et les lignes additionnelles dont l'opérateur supplémentaire n'a plus besoin pour le calcul de lignes supplémentaires de l'image de résultat ou de l'image intermédiaire supplémentaire.

8. Procédé selon l'une des revendications ci-dessus, dans lequel l'image de résultat comprend n lignes.

9. Dispositif pour la production d'une image de résultat par application d'un opérateur à une image d'entrée ayant n lignes, qui comprend une mémoire de données (4) et une unité de calcul (5), qui stocke l'image d'entrée dans un premier domaine (8), comportant n lignes de données, de la mémoire de données (4), et qui applique aux données de l'image d'entrée un opérateur comportant une extension de g lignes, g étant supérieur ou égal à deux lignes et étant inférieur ou égal à 2k + 1 lignes,

**caractérisé en ce que** le dispositif réserve k + 1 lignes additionnelles d'un deuxième domaine (9) de la mémoire de données (4), et

applique l'opérateur aux données de l'image d'entrée,
de telle sorte que l'opérateur, à partir des données de g lignes de balayage, calcule les données pour une ligne correspondante de l'image de résultat ou d'une image intermédiaire pour la production de l'image de résultat, et les stocke par lignes dans les lignes de données et les lignes additionnelles de telle sorte que les données calculées soient stockées d'abord dans les lignes additionnelles, puis dans les lignes de données dont l'opérateur n'a plus besoin pour le calcul de lignes supplémentaires de l'image de résultat ou de l'image intermédiaire.

10. Dispositif selon la revendication 9, dans lequel l'opération de copie est exécutée de telle sorte que les lignes de l'image de résultat soient stockées, selon la rangée, dans les lignes de données, et/ou dans lequel, après l'opération de copie, les lignes additionnelles sont validées.

11. Dispositif selon la revendication 9 ou 10, dans lequel l'opérateur accède, par l'intermédiaire d'un premier tableau d'adresses ($\tilde{A}$) aux données de l'image d'entrée stockées dans la mémoire de données (4), et, par l'intermédiaire d'un deuxième tableau d'adresses ($\tilde{B}$) stocke les données de l'image de résultat ou de l'image intermédiaire dans la mémoire de données (4), les deux tableaux d'adresses ($\tilde{A}$, $\tilde{B}$) étant décalés d'une manière cyclique l'un par rapport à l'autre de (k + 1) lignes, et, en particulier après production de l'image intermédiaire, l'opérateur étant appliqué d'une manière itérative (1 - 1) fois à l'image intermédiaire produite dans chaque cas, et, pour chaque itération, un premier et un deuxième tableaux d'adresses étant utilisés, qui sont décalés d'une manière cyclique, chaque fois de (k + 1) lignes, par rapport aux premier et deuxième tableaux d'adresses de l'étape d'itération immédiatement précédente.

12. Dispositif selon l'une des revendications 9 à 11, dans lequel une ou plusieurs chaînes de copies cycliques sont déterminées, qui toutes doivent chacune être parcourue une fois par l'itération, pour stocker les lignes de l'image de résultat, selon la rangée, dans les lignes de données du premier domaine (8), auquel cas, pour chaque chaîne de copie, une ligne de données dans laquelle aucune donnée de l'image de résultat n'est stockée est sélectionnée comme étant la première ligne cible de la chaîne de copie.

13. Dispositif selon la revendication 12, dans lequel la valeur de [l(k + 1)]mod(n + k + 1) est calculée en tant que paramètre w, auquel cas, quand w = 0, aucune copie des lignes de l'image de résultat n'est nécessaire, car ces dernières sont déjà stockées, selon la rangée, dans les lignes de données ; quand w ≠ 0 et quand le plus grand diviseur commun t de l(k + 1) et de (n + k + 1) est égal à 1, une chaîne de copie unique est déterminée sur toutes les lignes de données et les lignes additionnelles ; et, quand w ≠ 0 et t > 1, t chaînes de copie disjointes sont déterminées, chacune ayant la longueur (n + k + 1)/t, et, quand w ≠ 0, la ou les chaînes de copie déterminées sont exécutées.

14. Dispositif selon la revendication 9, dans lequel l'unité de calcul (5), après calcul de toutes les lignes de l'image intermédiaire, applique à l'image intermédiaire un opérateur supplémentaire, qui présente une extension de g' lignes, g' étant supérieur ou égal à deux lignes et étant inférieur ou égal à 2k + 1 lignes, de façon à calculer, à partir des données de g' lignes de l'image intermédiaire, une ligne de l'image de résultat ou d'une image intermédiaire supplémentaire, et à la stocker par lignes dans les lignes de données et les lignes additionnelles de telle sorte que les données calculées soient stockées d'abord dans les lignes de données et les lignes additionnelles qui ne contiennent pas de lignes de l'image intermédiaire, puis dans les lignes de données et les lignes additionnelles dont l'opérateur supplémentaire n'a plus besoin pour le calcul de lignes supplémentaires de l'image de résultat ou de l'image intermédiaire supplémentaire.

15. Dispositif selon l'une des revendications 9 à 14, dans lequel l'image de résultat comprend n lignes.

Fig. 1

Fig. 2

## Fig. 3

Fig. 4

## Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **KLETTE R ; ZAMPERONI P.** Handbook of Image Processing Operators. Wiley & Sons Ltd, August 1996, 76-95
- **WALTZ et al.** Gray-scale image processing algorithms using finite-state machine concepts. *Journal of Electronic Imaging, SPIE/IS&T,* Januar 2001, vol. 10 (1), 297-307
- Constant-Working-Space Algorithms for Image Processing. **ASANO T.** Emerging Trends in Visual Computing. Springer, 18. November 2008, 268-283

- **HAIQIAN Y et al.** Automatic Sliding Window Operation Optimization for FPGA-Based Computing Boards. *Field-Programmable Custom Computing Machines, 2006. FCCM '06, 14th Annual IEEE Symposium,* 01. April 2006, 76-88
- A Memory-Efficient Realization of Cyclic Convolution and Its Application to Discrete Cosine Transform. **CHANG et al.** IEEE Transaction on Circuits and Systems for Video Technology. IEEE Service Center, 01. Marz 2005, vol. 15, 445-453